# EUROPEAN PATENT APPLICATION

(11) **EP 3 575 628 A1**
(43) Date of publication of application: **04.12.2019**
(21) Application number: 17894043.3
(22) Date of filing: 05.09.2017
(51) Int. Cl.: F16F 9/32, C25D 11/04, C25D 11/18

(54) **SHOCK ABSORBER AND METHOD FOR MANUFACTURING SLIDING MEMBER**

(30) Priority: 30.01.2017 JP 2017014306
(71) Applicant: KYB Corporation, Tokyo 105-6111 (JP)
(72) Inventor: NAKASE, Takuya, Tokyo 105-6111 (JP)
(74) Representative: MFG Patentanwälte Meyer-Wildhagen Meggle-Freund Gerhard PartG mbB
(86) International application number: PCT/JP2017/031923
(87) International publication number: WO 2018/138953

(57) **Abstract**

A shock absorber (D) of the present invention includes an aluminum alloy-made cylinder (1) having a plasma electrolytic oxide film (A) on an inner periphery, a piston (2) slidably inserted in the cylinder (1), and a piston rod (3) movably inserted in the cylinder (1) and connected to the piston (2). Further, a method for manufacturing a sliding member includes a plasma electrolytic oxidation treatment step of forming a plasma electrolytic oxide film (A) with a film thickness of 40 µm or more on a sliding surface of an aluminum alloy-made sliding member, and a polishing treatment step of polishing a surface of the plasma electrolytic oxide film (A).

## Description

### Technical Field

The present invention relates to a shock absorber and a method for manufacturing a sliding member.

### Background Art

A shock absorber includes, as disclosed in JPH08-177930A, for example, a cylinder, a piston slidably inserted in the cylinder, and a piston rod movably inserted in the cylinder and connected to the piston. In such a shock absorber, when an external force acts on the piston through the piston rod and the piston moves with respect to the cylinder, resistance is applied to a flow of a hydraulic liquid that flows between an expansion side chamber and a compression side chamber divided by the piston in the cylinder to exert a damping force.

Then, in general, a steel pipe having chromium plating applied to an inner periphery to have a smooth inner peripheral surface is used for the cylinder constituting the shock absorber.

### Summary of the Invention

The conventional shock absorber using the steel pipe as the cylinder has a problem that the weight is heavy. In particular, in a case of using a magnetorheological fluid having iron powder dispersed in a base liquid, the shock absorber becomes extremely heavy, and therefore weight reduction is demanded.

Therefore, an object of the present invention is to provide a lightweight shock absorber and a method for manufacturing a lightweight sliding member.

To solve the above-described problem, a shock absorber of the present invention includes an aluminum alloy-made cylinder having a plasma electrolytic oxide film on an inner periphery, a piston slidably inserted in the cylinder, and a piston rod movably inserted in the cylinder and connected to the piston.

Further, a method for manufacturing a sliding member of the present invention includes a plasma electrolytic oxidation treatment step of forming a plasma electrolytic oxide film with a film thickness of 40 µm or more on a sliding surface of an aluminum alloy-made sliding member, and a polishing treatment step of polishing a surface of the plasma electrolytic oxide film.

### Brief Description of Drawings

Fig. 1 is a longitudinal sectional view of a shock absorber according to an embodiment.
Fig. 2(A) is an X-ray diffraction graph of when a plasma electrolytic oxide film having a film thickness of 20 µm is formed on a surface of an aluminum alloy. Fig. 2(B) is an X-ray diffraction graph of when a plasma electrolytic oxide film having a film thickness of 30 µm is formed on a surface of an aluminum alloy. Fig. 2(C) is an X-ray diffraction graph of when a plasma electrolytic oxide film having a film thickness of 40 µm is formed on a surface of an aluminum alloy.
Fig. 3 is a partially enlarged sectional view of when the plasma electrolytic oxidation treatment is applied to an inner periphery of a cylinder 1 to form a plasma electrolytic oxide film.
Fig. 4 is a table illustrating characteristics of abrasion resistance and friction coefficient of aluminum alloys having a plasma electrolytic oxide film.

### Description of Embodiments

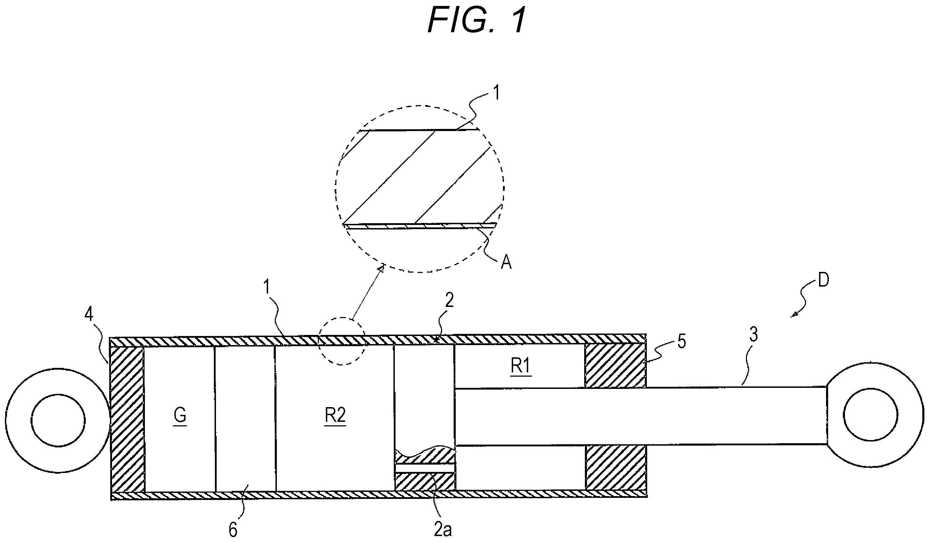

The present invention will be described on the basis of an illustrated embodiment. As illustrated in Fig. 1, a shock absorber D in an embodiment includes a cylinder 1 as a sliding member, a piston 2 slidably inserted in the cylinder 1, and a piston rod 3 movably inserted in the cylinder 1 and connected to the piston 2.

Hereinafter, details of the shock absorber D will be described. The cylinder 1 is an aluminum alloy-made cylinder body, and having one end closed with a bottom cap 4 and the other end to which an annular rod guide 5 is attached, as illustrated in Fig. 1. Then, the cylinder 1 is a sliding member having an inner peripheral surface with which the piston 2 is in sliding contact as a sliding surface, and has a plasma electrolytic oxide film A formed by plasma electrolytic oxidation treatment on the sliding surface. The aluminum alloy that is a base material of the cylinder 1 is an alloy containing copper, manganese, silicon, magnesium, zinc, nickel, or the like in aluminum, and is superior in terms of strength and the like to pure aluminum.

To form the plasma electrolytic oxide film A on the inner peripheral surface of the cylinder 1, the following treatment is performed. First, plasma electrolytic oxidation treatment is applied to an inner periphery of the aluminum alloy-made cylinder 1 to form the plasma electrolytic oxide film A having a film thickness of 40 µm or more.

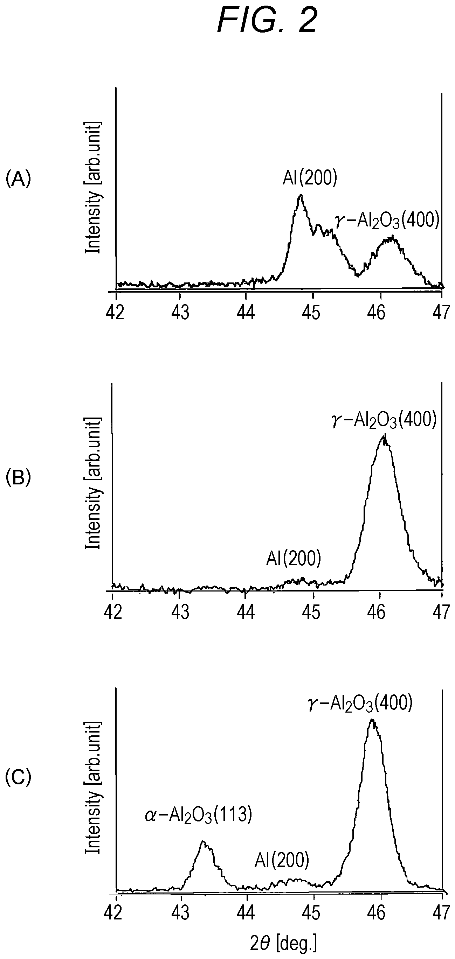

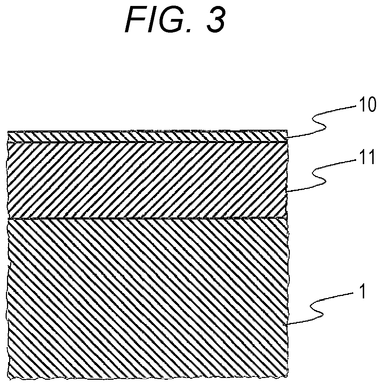

When the plasma electrolytic oxidation treatment is applied to the inner periphery of the aluminum alloy-made cylinder 1 to form the plasma electrolytic oxide film A having the film thickness of 40 µm or more, the plasma electrolytic oxide film A containing corundum-type α-alumina crystal that is superior in hardness to spinel-type γ-alumina is obtained. α-alumina has characteristics of higher hardness and superior abrasion resistance properties to γ-alumina. As illustrated in Fig. 3, an experiment of applying the plasma electrolytic oxidation treatment to a surface of an aluminum alloy to form a plasma electrolytic oxide film has been conducted. Figs. 2(A), 2(B), and 2(C) illustrate X-ray diffraction graphs of when plasma electrolytic oxide films having film thicknesses of 20 µm, 30 µm,and 40 µm are formed on a surface of an aluminum alloy, respectively. As can be understood from Figs. 2(A) to 2(C), the plasma electrolytic oxide films are formed with the film thicknesses of 20 µm, 30 µm, and 40 µm, and a result that the plasma electrolytic oxide film containing α-alumina is obtained at a content of 15% in the plasma electrolytic oxide film having the film thickness of 40 µm was obtained. Therefore, if the plasma electrolytic oxide film having the film thickness of 40 µm or more is formed on the inner periphery of the aluminum alloy-made cylinder 1, the plasma electrolytic oxide film containing α-alumina is can be obtained.

The surface of the plasma electrolytic oxide film A formed on the inner peripheral surface as the sliding surface of the cylinder 1 in this manner has a porous layer 10 containing many pores and a layer 11 containing a lot of α-alumina formed under the porous layer 10, as illustrated in Fig. 3. Therefore, the inner peripheral surface of the cylinder 1 after only the plasma electrolytic oxidation treatment has been performed is rough, and frictional resistance is large when the piston 2 is slid. Therefore, after the plasma electrolytic oxidation treatment is applied to form the plasma electrolytic oxide film A on the inner periphery of the cylinder 1, polishing treatment of polishing the inner peripheral surface of the cylinder 1 is performed. When the surface is removed in a range of from 5 µm or more to 20 µm or less, by the polishing treatment, the porous layer 10 can be removed and the layer 11 containing a lot of α-alumina can be formed on the inner periphery of the cylinder 1. Note that the surface roughness after the polishing treatment was Ra 0.4 µm or less.

When the polishing treatment is performed after the plasma electrolytic oxidation treatment is performed on the inner peripheral surface of the cylinder 1 in this way, the plasma electrolytic oxide film A having a smooth surface can be formed on the inner peripheral surface of the cylinder 1. From the above description, the plasma electrolytic oxide film A in the present example is formed by applying the plasma electrolytic oxidation treatment on the inner periphery of the aluminum alloy-made cylinder 1 to form the plasma electrolytic oxide film with the film thickness of 45 µm or more, and then polishing the inner peripheral surface of the cylinder 1 to remove the surface within the range of from 5 µm or more to 20 µm or less.

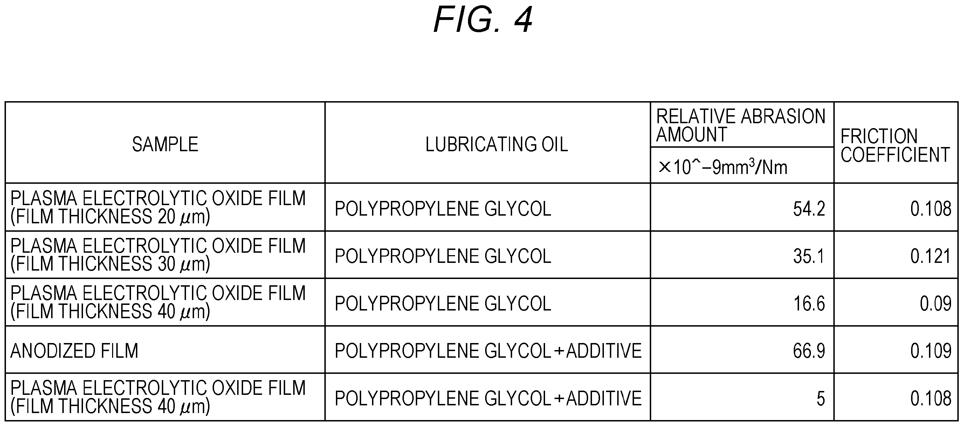

The plasma electrolytic oxide film was formed on the disk surface of the aluminum alloy as described above, and an abrasion test was conducted by reciprocating a roller made of high-carbon chromium bearing steel material in an axial direction on the aluminum alloy in a state of interposing a lubricating oil between the aluminum alloy and the roller. Fig. 4 illustrates friction characteristics of three samples prepared by forming plasma electrolytic oxide films with the film thicknesses of 20 µm, 30 µm, and 40 µm and applying the polishing treatment to surfaces, using polypropylene glycol as the lubricating oil. As illustrated in Fig. 4, it is found that the sample of the plasma electrolytic oxide film formed with the film thickness of 40 µm has an extremely low friction coefficient and high abrasion resistance properties.

Note that, for a sample prepared by applying sulfuric acid anodizing treatment to the disk surface of the aluminum alloy to form an anodized film and a sample prepared by forming the plasma electrolytic oxide film with the film thickness of 40 µm, Fig. 4 illustrates results of using a lubricating oil in which an additive was added to polypropylene glycol to enhance lubrication properties. From the results, the aluminum alloy obtained by forming the plasma electrolytic oxide film with the film thickness of 40 µm and applying the polishing treatment on the surface has an extremely lower friction coefficient and extremely higher abrasion resistance than an aluminum alloy formed with a typical alumite film. From the above, the aluminum alloy-made cylinder 1 having the plasma electrolytic oxide film A on the inner periphery has characteristics of a light weight, superior abrasion resistance properties, and low friction.

Further, as can be confirmed from the table in Fig. 4, even in the case where the plasma electrolytic oxide film is formed to have 20 µm, the plasma electrolytic oxide film is superior in the abrasion resistance properties to the anodized film. Although the friction coefficients of the plasma electrolytic oxide film and the anodized film are about the same, it can be found that the plasma electrolytic oxide film is also superior in the friction coefficient to the anodized film because the lubricating oil with the enhanced lubrication properties is used in the test of the anodized film.

Meanwhile, when the piston 2 is slidably inserted in the cylinder 1, the piston 2 divides the inside of the cylinder 1 into an expansion side chamber R1 and a compression side chamber R2. The expansion side chamber R1 and the compression side chamber R2 are filled with a liquid such as a hydraulic oil as a hydraulic liquid. Further, the piston 2 is provided with a damping passage 2a communicating the expansion side chamber R1 and the compression side chamber R2. In the present example, the damping passage 2a serves as a throttle passage that provides resistance against the flow of the hydraulic liquid flowing from the expansion side chamber R1 to the compression side chamber R2 or from the compression side chamber R2 to the expansion side chamber R1. Note that, in the present example, the damping passage 2a allows the bidirectional flow of the hydraulic liquid. However, a damping passage that allows only the flow from the expansion side chamber R1 to the compression side chamber R2 and a damping passage that allows only the flow from the compression side chamber R2 to the expansion side chamber R1 may be provided. Further, a damping valve may be provided in the damping passage 2a. Further, in a case where the hydraulic liquid is a magnetorheological fluid, the piston 2 may be provided with a magnetic field generating part such as a magnet or an electromagnet that exerts a magnetic field on the magnetorheological fluid passing through the damping passage 2a.

The piston rod 3 is movably inserted in the cylinder 1 and having one end connected to the piston 2 and the other end protruding to an outside of the cylinder 1 through an inner periphery of the annular rod guide 5 attached to a pipe end of the cylinder 1.

Further, a free piston 6 that divides the compression side chamber R2 and an air chamber G is slidably inserted in the cylinder 1. When the piston rod 3 goes in and out of the cylinder 1, the free piston 6 moves inside the cylinder 1 to change the volume of the air chamber G to compensate the volume of the piston rod 3 that goes in and out of the cylinder 1. Note that a reservoir that compensates the volume may be provided inside or outside the cylinder 1 instead of providing the air chamber G with the free piston 6 to compensate the volume of the piston rod 3 that goes in and out of the cylinder 1.

In the shock absorber D configured as described above, the piston 2 in sliding contact with the cylinder 1 is in contact with the plasma electrolytic oxide film A formed on the inner peripheral surface of the cylinder 1. The cylinder 1 provided with the plasma electrolytic oxide film A has the characteristics of superior abrasion resistance properties and low friction and also has favorable sliding characteristics of the piston 2 and less abrasion. Therefore, the cylinder 1 can sufficiently withstand use for a longer period of time even using the aluminum alloy as the base material. Further, in an MRF shock absorber using a magnetorheological fluid containing iron powder in a hydraulic fluid, the iron powder enters a sliding portion between the cylinder 1 and the piston 2 and thus a use environment becomes severe but the cylinder 1 can withstand abrasion even in such a use environment.

The cylinder 1 is superior in the abrasion resistance properties even if the cylinder 1 is made of the aluminum alloy and can be used for the shock absorber D as long as the cylinder 1 has the plasma electrolytic oxide film A having the characteristics of superior abrasion resistance properties and lower friction than the anodized film on the inner periphery. Therefore, the shock absorber D can be made lightweight. Then, since the MRF shock absorber uses the magnetorheological fluid containing iron powder, the weight tends to be heavy but the gravity reduction can be effectively performed in the case where the shock absorber D is the MRF shock absorber because the aluminum alloy-made cylinder 1 can be used.

Further, when the plasma electrolytic oxide film A contains α-alumina, the plasma electrolytic oxide film A has high hardness and thus has characteristics of more superior abrasion resistance properties and lower friction. Therefore, the sliding characteristics between the cylinder 1 and the piston 2 are further improved, and the shock absorber D can more smoothly stroke and has a longer product life.

Further, in the case where the plasma electrolytic oxide film A is obtained by being formed with the film thickness of 40 µm or more on the inner periphery of the cylinder 1 by the plasma electrolytic oxidation treatment and then applying the polishing treatment to the inner peripheral surface, the plasma electrolytic oxide film A becomes the plasma electrolytic oxide film A containing α-alumina and the porous layer 10 can be removed. Therefore, the shock absorber D configured in this manner has not only the superior abrasion resistance properties and the low friction characteristics on the inner peripheral surface of the cylinder 1 but also the smooth surface, and thus can more smoothly stroke and has a longer product life.

Further, the plasma electrolytic oxide film A may be formed by being formed with the film thickness of 45 µm or more on the inner periphery of the cylinder 1 by the plasma electrolytic oxidation treatment, and then applying the polishing treatment on the inner peripheral surface to remove the surface within the range of from 5 µm or more to 20 µm or less. In this case, the porous layer 10 is removed and further the layer 11 containing a lot of α-alumina can be formed as the inner peripheral surface of the cylinder 1, and thus the abrasion resistance properties and the low friction properties are further improved. Therefore, the shock absorber D can further smoothly stroke and has a longer product life.

Further, according to a method for manufacturing the cylinder 1 as the sliding member, the method including a plasma electrolytic oxidation treatment step of forming the plasma electrolytic oxide film A with the film thickness of 40 µm or more on the inner periphery of the aluminum alloy-made cylinder 1, and a polishing treatment step of polishing the inner peripheral surface of the plasma electrolytic oxide film A, the layer 11 containing a lot of α-alumina and having the smooth surface can be formed as the inner peripheral surface of the cylinder 1. Therefore, the abrasion resistance properties and the low friction properties of the aluminum alloy-made cylinder 1 are improved, and thus the cylinder 1 can be used for the shock absorber D and can be made lightweight. Further, the shock absorber D including the cylinder 1 manufactured by the manufacturing method can smoothly stroke and has a long product life.

Note that, in the above description, the manufacturing method can be used for manufacturing the shock absorber D using the sliding member as the cylinder 1. However, the manufacturing method can also be applied to manufacturing the sliding member having the sliding surface and thus can be applied to manufacturing parts having the sliding surface such as a valve plate, a case, or an actuator of a hydraulic pump or a hydraulic motor, other than the shock absorber.

The favorable embodiments of the present invention have been described in detail. Alterations, modifications, and changes can be made without departing from the scope of the claims.

This application claims priority based on Japanese Patent Application No. 2017-014306 filed on January 30, 2017 with the Japanese Patent Office, the entire contents of this application being incorporated herein by reference.

## Claims

1. A shock absorber comprising:
an aluminum alloy-made cylinder having a plasma electrolytic oxide film on an inner periphery;
a piston slidably inserted in the cylinder; and
a piston rod movably inserted in the cylinder and connected to the piston.

2. The shock absorber according to claim 1, wherein
the plasma electrolytic oxide film contains α-alumina.

3. The shock absorber according to claim 1, wherein
the plasma electrolytic oxide film is formed by being formed with a film thickness of 40 µm or more on the inner periphery of the cylinder by plasma electrolytic oxidation treatment and then applying polishing treatment to an inner peripheral surface.

4. The shock absorber according to claim 3, wherein
the plasma electrolytic oxide film is formed by being formed with a film thickness of 45 µm or more on the inner periphery of the cylinder by plasma electrolytic oxidation treatment and then applying polishing treatment to an inner peripheral surface to remove a surface within a range of from 5 µm or more to 20 µm or less.

5. A method for manufacturing a sliding member, the method comprising:
a plasma electrolytic oxidation treatment step of forming a plasma electrolytic oxide film with a film thickness of 40 µm or more on a sliding surface of an aluminum alloy-made sliding member; and
a polishing treatment step of polishing a surface of the plasma electrolytic oxide film.
